# EUROPÄISCHE PATENTSCHRIFT

(11) **EP 1 606 343 B1**
(45) Veröffentlichungstag und Bekanntmachung des Hinweises auf die Patenterteilung: **13.08.2008**
(21) Anmeldenummer: 04719424.6
(22) Anmeldetag: 11.03.2004
(51) Int. Cl.: C08K 3/16, C08K 3/22, C08K 9/02, C09C 1/00, C09D 17/00, B29D 19/00

(54) **HOCHGLÄNZENDE NICHTTOXISCHE PERLGLANZPIGMENTPRÄPARATION**
HIGH-GLOSS NON-TOXIC NACREOUS PIGMENT PREPARATION
PREPARATION DE PIGMENT A LUSTRE NACRE NON TOXIQUE ET TRES BRILLANTE

(30) Priorität: 26.03.2003 DE 10313663
(43) Veröffentlichungstag der Anmeldung: 21.12.2005
(73) Patentinhaber: Merck Patent GmbH, 64293 Darmstadt (DE)
(72) Erfinder: EDLER, Gerhard, 65468 Trebur (DE)
(86) Internationale Anmeldenummer: PCT/EP2004/002510
(87) Internationale Veröffentlichungsnummer: WO 2004/085530

(56) Entgegenhaltungen:
- EP-A- 0 994 166
- EP-A- 1 254 927
- WO-A-01/16235
- DE-A- 2 402 611

## Beschreibung

Die vorliegende Erfindung betrifft eine hochglänzende nichttoxische Perlglanzpigmentpräparation enthaltend ein oder mehrere Bindemittel und ein Pigmentgemisch bestehend aus mindestens zwei Komponenten A und B im Verhältnis 20 : 80 bis 80 : 20, wobei Komponente A BiOCI-Pigmente und Komponente B Perlglanzpigmente sind, sowie deren Verwendung in Kunststoffen, Harzen und insbesondere in Knopfplatten und Bijouterieartikeln.

Zur Herstellung von Perlmuttknöpfen werden von den Knopfherstellern hochglänzende Perlglanzpigmente benötigt. Perlglanzpigmente, die diese Anforderung erfüllen, werden zur Zeit aus basischem Bleicarbonat oder aus BiOCl synthetisiert.

Beide Produkte zeichnen sich durch folgendes Eigenschaftsprofil aus:

| | | |
|---|---|---|
| Eigenschaft | Basisches Bleicarbonat | BiOCl |
| Glanz | Hochglänzend | Hochglänzend |
| Chemische Resistenz | Empfindlich gegen Säuren und Schwefelverbindungen | Hohe chemische Resistenz |
| Lichtechtheit | Hoch | Geringe Stabilität gegen UV |
| Toxizität | Toxisch | Nicht toxisch |
| Preis | Niedrig | Hoch |

Basisches Bleicarbonat besteht aus einheitlichen, hexagonalen Kristallplättchen mit glatten, ebenen Oberflächen, die hochtransparent sind, eine Brechzahl n > 2 aufweisen und sehr lichtbeständig sind.

Als extrem dünne Kristallplättchen unterliegen diese Perlglanzpigmente gewissen Einschränkungen in anwendungstechnischer Hinsicht. Einwirkung von Säuren, Laugen und Schwefelverbindungen, hohe mechanische und thermische Beanspruchung führen zu einer Zerstörung des Kristallplättchens und damit zu Glanzverlust. Damit ist basisches Bleicarbonat nicht überall unbegrenzt einsetzbar, vor allem dort nicht, wo physiologische Gesichtspunkte und Belange des Umweltschutzes zu berücksichtigen sind, da es toxisch ist.

Basisches Bleicarbonat besitzt aufgrund seines günstigen Preis-/Leistungsverhältnisses zwar immer noch eine hohe Akzeptanz in der Knopfindustrie, der Druck seitens der Gesetzgebung vieler Länder und der Bekleidungsindustrie zu Knopfeinfärbungen ohne toxische Schwermetalle nimmt jedoch zu.

Als nichttoxische Alternative zum basischen Bleicarbonat wird BiOCl aufgrund seines hohen Glanzes eingesetzt. BiOCl kristallisiert tetragonal und bildet je nach Fällungsbedingungen unregelmäßige Flitter oder bei Hochglanzpigmenten runde bis quadratische extrem flache Doppelpyramiden.

Nachteilig beim BiOCl sind die hohe Dichte und insbesondere seine Empfindlichkeit gegenüber kurzwelligem Licht, das durch Photolyse allmähliche Schwärzung bewirkt. Trotz der hohen Brechzahl (n= 2,15) und des metallischen Silberglanzes erreichen selbst die besten BiOCI-Präparate aufgrund der weniger günstigen Kristallform nicht das Deckvermögen eines vergleichbaren basischen Bleicarbonats. Von Nachteil ist ebenfalls die geringe mechanische Belastbarkeit der BiOCI-Pigmente.

Ein weiterer Nachteil ist, dass BiOCI-Pigmente gegenüber den basischen Bleicarbonatpigmenten vergleichsweise sehr teuer sind. Aus Kostengründen werden daher die BiOCI-Pigmente in relativ niedriger Konzentration eingesetzt und aufgrund der im Vergleich zu basischem Bleicarbonat höheren Transparenz genügt vielfach das Deckvermögen dieser Einfärbung nicht den Anforderungen. Zur Erhöhung des Deckvermögens werden daher von den Verarbeitern den Perlmutteinfärbungen meist deckende Pigmente wie beispielsweise Titandioxid, Lithopone, Zinksulfid oder Bariumsulfat zugesetzt, die jedoch eine deutliche Glanzreduktion zur Folge haben und den Perlmutteffekt aus allen Betrachtungswinkeln weiß überlagern. Dies entspricht nicht dem Verhalten natürlichen Perlmutts, der bei Änderung des Betrachtungswinkels von senkrecht zu flach einen deutlichen hell/dunkel Glanzflop zeigt.

Aufgabe der vorliegenden Erfindung ist es hochglänzende, nichttoxische Pigmente zur Herstellung einer Perlglanzpigmentpräparation mit Perlmutteffekten zu finden, die die oben genannten Nachteile des BiOCI-Pigments nicht aufweisen.

Überraschenderweise wurde nun eine Perlglanzpigmentpräparation enthaltend ein Bindemittel und ein Pigmentgemisch bestehend aus BiOCI-Pigmenten und Perlglanzpigmenten gefunden, die eine preisgünstigere Alternative zum hochpreisigen BiOCl darstellt und sich gleichzeitig durch einen außergewöhnlich hohen Glanz bei gutem Deckvermögen auszeichnet.

Mischungen von BiOCl-Pigmenten und preiswerten Perlglanzpigmenten, insbesondere Silberpigmenten auf Basis von plättchenförmigen Substraten, die mit TiO₂ oder mindestens eine Schichtenfolge von TiO₂-SiO₂-TiO₂, beschichtet sind, die in einem bestimmten Verhältnis gemischt werden, zeichnen sich dadurch aus, dass der resultierende Glanz der BiOCI-Pigmente überproportional günstig beeinflusst wird bei gleichzeitig deutlich gesteigertem Deckvermögen. Sowohl der visuelle Eindruck als auch die mit einem Spektralphotometer ermittelten Messwerte zeigen auf, dass in Mischungen der beiden Pigmente der Glanzabfall des BiOCI-Hochglanzpigments deutlich geringer ist als es nach dem Mischungsverhältnis der beiden Pigmente zu erwarten wäre. Der Glanzeindruck entspricht dabei dem von natürlichem Perlmutt, da bei wechselnden Betrachtungswinkeln der für Perlmutt typische hell/dunkel Glanzflop auftritt. Teile die spanabhebend aus Halbzeug, eingefärbt mit der erfindungsgemäßen Mischung, hergestellt werden, zeigen ebenfalls die typische dunkle Schnittkante natürlichen Perlmutts.

Perlglanzpigmente, wie z.B. mit TiO₂ beschichtete Glimmerplättchen, zeichnen sich durch ein günstiges Eigenschaftsprofil aus, insbesondere sind hier zu nennen, die hohe chemische und thermische Resistenz, gute Lichtstabilität, nicht toxisch, niedriger Preis und ihre leichte Handhabung bei der Einarbeitung in die Anwendungsmedien, wie z.B. Kunststoffe. Aufgrund ihres im Vergleich zu den basischen Bleicarbonat- und BiOCI-Pigmenten geringeren Glanzes finden diese Perlglanzpigmente bei der Knopf- und Bijouterieherstellung jedoch nur geringe Anwendung, da in diesen Anwendungen eine dem natürlichen Perlmutt ähnliche Glanzanmutung angestrebt wird.

Gegenstand der Erfindung ist somit eine hochglänzende nichttoxische Perlglanzpigmentpräparation gemäß Anspruch 1 enthaltend Bindemittel und ein Pigmentgemisch bestehend aus mindestens zwei Komponenten A und B im Verhältnis 20 : 80 bis 80 : 20, wobei Komponente A BiOCI-Pigmente und Komponente B Perlglanzpigmente sind.

Gegenstand der Erfindung ist ebenfalls die Verwendung der erfindungsgemäßen hochglänzenden Pigmentpräparation, insbesondere in Kunststoffen, Kunststofffolien, Harzen, Gießharzen sowie in Knöpfen und Bijouteriewaren.

Mischungen aus BiOCI-Pigmenten mit plättchenförmigen Farbmitteln sind aus der WO 01/16235 A1 bekannt. Die Verwendung von BiOCI-Pigmenten in Kombination mit Perlglanzpigmenten, insbesondere mit TiO₂ beschichteten Plättchen in einem bestimmten Verhältnis für Harze, insbesondere Gießharze, wird dort nicht beschrieben. In der DE 44 32 225 A1 werden Aluminiummetalleffektlacke beschrieben, die Pigmentmischungen mit BiOCI-Pigmenten enthalten können. Die Verwendung der erfindungsgemäßen Pigmentpräparation in Harzen, Kunststoffen und insbesondere in Knopfpasten wird nicht im Stand der Technik beschrieben.

In der Gießharzverarbeitung werden leicht fließende Pastenpräparationen bevorzugt, die ein luftblasenfreies Einrühren in das Harz und eine schnelle und gleichmäßige Verteilung der Pigmente im viskosen Gießharz unterstützen. Die Zusammensetzung der Pastenflüssigkeit besteht dabei vorzugsweise aus Lösemitteln, Weichmachern und einer oder mehreren Harzkomponenten, wie beispielsweise Nitrocellulose, Alkydharze, Acrylate, usw. Die Verträglichkeit mit dem Anwendungsmedium bestimmt dabei im wesentlichen die Auswahl der Harzkomponente.

Zur Verbesserung der Handhabung der Paste und Optimierung des Anwendungsergebnisses enthält die erfindungsgemäße Pigmentpräparation weiterhin in der Kunststoffindustrie übliche Additive in Mengen von 0,1 bis 10 Gew.%, wie z.B. Haftvermittler, Dispergierhilfen, oberflächenaktive Substanzen, Entschäumer, Verlaufsmittel, Emulgatoren, Netzmittel, Antistatika, UV-Stabilisatoren, Antiabsetzmittel.

Weiterhin enthält die erfindungsgemäße Pigmentpräparation Prozeßhilfsmittel, wie z.B. Weichmacher, in Mengen von 0,1 bis 30 Gew.% bezogen auf die Präparation. Alle dem Fachmann bekannten Weichmacher sind für die erfindungsgemäße Perlglanzpigmentpräparation geeignet, z.B. solche, wie sie im Kunststoff-Taschenbuch, 27. Ausgabe, Saechtling, Hanser-Verlag München, 2001 aufgelistet werden. Insbesondere geeignet sind Phthalate, Hydroxycarbonsäureester, epoxidierte Fettsäure-Derivate, Sojaölderivate und Sebacinsäure.

Sofern die erfindungsgemäße Pigmentpräparation ein Lösemittel oder Lösemittelgemisch enthält, muss es mit dem verwendeten Bindemittel gut verträglich sein. Geeignete Lösemittel sind hydrophile und hydrophobe Lösemittel, die flüchtig oder nicht-flüchtig sein können. Insbesondere geeignete Lösemittel sind Wasser, organische Lösemittel, wie z.B. Benzin, Benzol, Toluol, Ester, wie z.B. Butylacetat oder Ethylacetat, Etherester, wie z.B. Ethylglykolacetat, Etheralkohole, wie z.B. Ethylglykol oder Butylglykol, Ether, wie z.B. Dimethylether, Tetrahydrofuran, Ketone, wie z.B. Cyclohexanon, Aceton, Ethylmethylketon oder Alkohole, wie z.B. Methanol, Ethanol oder Butanol. Es kann auch ein Lösemittelgemisch der genannten Lösemittel verwendet werden.

Die Konzentration der Lösemittelkomponente in der erfindungsgemäßen Perlglanzpigmentpräparation beträgt 10 - 60 Gew. %, vorzugsweise 15 - 50 Gew. % und insbesondere 20 - 35 Gew. %, bezogen auf die Perlglanzpigmentpräparation.

Alle dem Fachmann bekannten Bindemittel sind für die erfindungsgemäße Perlglanzpigmentpräparation geeignet, z.B. solche, wie sie in Carsten Lack-Rohstoff-Tabellen, 10. Auflage, Vincentz-Verlag, 2000, aufgelistet sind. Insbesondere geeignet sind Polyesterharze, Alkydharze, Acrylharze, Cellulosederivate, modifizierte Naturharze, Melaminharze, Polyvinylacetat- und PVC-Copolymerharze, Phenolharze, Polyacrylatharze, Polymethacrylatharze, Polyvinylharze, Polystyrolharze, Epoxidharze, Polyurethane, Kolophoniumharze.

Der Anteil der Bindemittel in der erfindungsgemäßen Perlglanzpigmentpräparation beträgt 5-15 Gew.%.

Perlglanzpigmente basierend auf der Träger-Beschichtungstechnologie liegen üblicherweise als Pulver vor und werden vorteilhafterweise vor der Zugabe zu einem Gießharz zu einer gießfähigen Paste angeteigt um den Einschluss von Luft in das viskose Harz zu vermeiden. Als Anteigungsmittel kommen vorzugsweise die bereits oben genannten Bindemittel und flüssigen Komponenten in Frage. Ob die Mischung der Komponente A mit der Komponente B bereits vor der Zugabe zum Gießharz oder bei getrennter Zugabe erst innerhalb des Gießharzes erfolgt ist für das Ergebnis ohne Belang. In der Praxis wird jedoch eine verarbeitungsfertige Mischung der beiden Komponenten als gießfähige Paste bevorzugt. In Anwendungen, in denen der Einschluss von Luft kein Problem darstellt, kann die Komponente B auch als Pulver eingesetzt werden. Das Verhältnis von Komponente A zu Komponente B beträgt 80 : 20 bis 20 : 80, besonders bevorzugt 70 : 30 bis 30 : 70 und insbesondere 60 : 40 bis 40 : 60.

BiOCI-Pigmente sind bekannt, z.B. aus der DE-PS 10 03 377, U.S. 2,975,053, DE 24 11 966, EP 0 496 686 B1 und DE 43 05 280 A1 und sind kommerziell erhältlich und werden beispielsweise von der Fa. Merck KGaA, Deutschland unter den Markennamen Bi-Flair^{®}, Biron^{®} angeboten. Aufgrund der vielfältigen Produktionsmöglichkeiten sind BiOCI-Pigmente mit unterschiedlichen optischen Eigenschaften, von matt bis glänzend und von transparent bis hin zu deckend erhältlich. Die Größe der einzelnen Partikel für die stark glänzenden BiOCI-Pigmente beträgt vorzugsweise 6-20 µm, insbesondere 8-18 µm und ganz besonders bevorzugt 10-16 µm.

Die erfindungsgemäßen Pigmentgemische enthalten neben den BiOCI-Pigmenten ein oder mehrere Perlglanzpigmente. Als Perlglanzpigmente werden insbesondere Pigmente auf der Basis plättchenförmiger, transparenter oder semi-transparenter Substrate aus z.B. Schichtsilikaten, wie etwa synthetischer oder natürlicher Glimmer, Talkum, Sericit, Kaolin, oder anderen silikatischen Materialien verwendet, die mit farbigen oder farblosen Metalloxiden wie z.B. TiO₂, Titansuboxide, Titanoxinitride, Pseudobrookit, Fe₂O₃, Fe₃O₄, FeOOH, SnO₂, Cr₂O₃, ZnO, CuO, NiO und anderen Metalloxiden allein oder in Mischung in einer einheitlichen Schicht oder in aufeinanderfolgende Schichten beschichtet sind.

Perlglanzpigmente sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017, 38 42 330 und 44 45 394 bekannt und im Handel erhältlich, z.B. unter den Marken Iriodin^{®}, Afflair^{®} oder Timiron^{®} der Firma Merck KGaA, Darmstadt, Deutschland.

Besonders bevorzugte Pigmentpräparationen enthalten TiO₂-, Fe₂O₃-, TiO₂-Suboxide, TiO₂/Fe₂O₃-, Fe₃O₄-, FeOOH-, FeOOH/TiO₂-Glimmerpigmente. Weiterhin bevorzugt sind mit TiO₂ und/oder Fe₂O₃ beschichtete TiO₂-, Graphit-, Fe₂O₃-, SiO₂- oder Al₂O₃-Plättchen. Insbesondere bevorzugt sind TiO₂/Glimmerpigmente und mit TiO₂-SiO₂-TiO₂ beschichtete Glimmerpigmente. Ganz besonders bevorzugt sind Silberpigmente auf Basis von Glimmerplättchen oder Glasplättchen.

Als weitere plättchenförmige Pigmente kommen vor allem Perlglanzpigmente auf Basis von SiO₂-Plättchen, Al₂O₃-, Graphit-, Polymer-, TiO₂-Plättchen oder Glas-Plättchen, die mit einer oder mehreren Metalloxidschichten (ein, zwei, drei, fünf, sechs oder sieben) umhüllt sind, in Frage.

Weiterhin sind als Komponente B die beispielsweise aus den deutschen Offenlegungsschriften DE 196 18 563, DE 196 18 566, DE 196 18 569, DE 197 07 805, DE 197 07 806, DE 197 46 067 bekannten Mehrschichtpigmente geeignet. Diese basieren auf einer plättchenförmigen, transparenten, farbigen oder farblosen Matrix, bestehend aus Glimmer (synthetisch oder natürlich), SiO₂-Plättchen Glas-Plättchen, Al₂O₃-Plättchen, TiO₂-Plättchen, Polymerplättchen, und besitzen in der Regel eine Dicke zwischen 0,3 und 5 µm, insbesondere zwischen 0,4 und 2,0 µm. Die Ausdehnung in den beiden anderen Dimensionen beträgt üblicherweise zwischen 1 und 250 µm, vorzugsweise zwischen 2 und 100 µm, und insbesondere zwischen 5 und 40 µm. Die Mehrschichtpigmente bestehen aus der Matrix (Substrat) beschichtet mit Metalloxiden (mindestens 2). Die Beschichtung der Substratplättchen, wie z. B. Glimmer, SiO₂-Plättchen, Glasplättchen, Al₂O₃-Plättchen, mit mehreren Schichten erfolgt in der Regel so, dass ein Schichtaufbau bestehend aus alternierenden hoch- und niedrigbrechenden Schichten entsteht. Vorzugsweise enthalten die Mehrschichtpigmente 2, 3, 4, 5, 6 oder 7 Schichten, insbesondere 3, 4 oder 5 Schichten. Geeignete hochbrechende Metalloxide sind beispielsweise Titandioxid, Zirkonoxid, Zinkoxid, Eisenoxide, Eisen-Titan-Oxide (Eisentitanate) und/oder Chromoxid, insbesondere TiO₂ und/oder Fe₂O₃. Als niedrigbrechende Metalloxide kommen SiO₂ und Al₂O₃ zum Einsatz. Es kann hierfür jedoch auch MgF₂ oder ein organisches Polymer (z.B. Acrylat) eingesetzt werden. Die Beschichtung der Substratplättchen kann z.B. erfolgen wie in der WO 93/08237 (nasschemische Beschichtung) oder DE-OS-196 14 637 (CVD-Verfahren) beschrieben.

Bevorzugte Mehrschichtpigmente besitzen folgenden Aufbau:

Substrat + TiO₂-Schicht + SiO₂-Schicht + TiO₂-Schich

Substrat + TiO₂-Schicht + Al₂O₃-Schicht + TiO₂-Schicht

Die Partikelgröße der Perlglanzpigmente beträgt vorzugsweise 1-200 µm, insbesondere 1-120 µm und ganz besonders bevorzugt 1-60 µm.

Die Perlglanz- oder Mehrschichtpigmente gemäß Komponente B können auch zur Verbesserung der Licht-, Wetter- und chemischen Stabilität oder zur Erhöhung der Kompatibilität in unterschiedlichen Medien noch mit einer Schutzschicht versehen sein. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus Al₂O₃ oder ZrO₂ oder deren Gemische bzw. Mischphasen auf die Pigmentoberfläche aufgebracht werden. Weiterhin sind organische Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493. Diese zusätzlich aufgebrachten Stoffe machen nur etwa 0,1 bis 5 Gew.%, vorzugsweise 0,5 bis 3,0 Gew.%, des Pigments aus.

Empfehlenswert ist häufig weiterhin die Zugabe eines UV-Absorbers zu der erfindungsgemäßen Perlglanzpigmentpräparation in Mengen von 0,01-10 Gew.%, vorzugsweise von 0,01-5 Gew.% und insbesondere von 0,01-3 Gew.% bezogen auf den BiOCI-Gehalt. Besonders geeignete UV-Stabilisatoren sind solche, die im Handel unter dem Namen Eusolex^{®} (Fa. Merck KGaA), wie z. B. Eusolex^{®} 4360, ein 2-Hydroxy-4-methoxy-benzophenon, sowie Benztriazole, wie z.B. Tinuvin^{®} (Ciba-Geigy), sind.

Diese Maßnahme ist bei der erfindungsgemäßen Perlglanzpigmentpräparation jedoch nur bei extremer Belastung mit UV-Strahlung zu treffen, wie sie beispielweise bei längerer Exposition im Außenbereich auftritt. Bei der Anwendung für Knöpfe und Bijouteriewaren reicht die UV-Absorption der in der bevorzugten Komponente B enthaltenen Metalloxide (TiO₂) aus um die Mischung in gleicher Weise zu schützen, wie der in dieser Anwendung übliche Zusatz von 0,01 % eines Benztriazols, z.B. Tinuvin^{®} 328 der Firma Ciba-Geigy. Dies wird durch das folgende Diagramm eines Belichtungstests deutlich. Die in der erfindungsgemäßen Periglanzpigmentpräparation enthaltende Pigmentmischung erzielte Belichtungszeit ist gegenüber einem reinen BiOCI-Hochglanzpigment dreimal länger, d.h. die Lichtechtheit steigt von Stufe 3-4 der Blauskala auf Stufe 6 der Blauskala an.
(BMS = Button Manufacturing Silver: Paste mit Iriodin^{®} 123)
(Bi = Bi-Flair^{®}: Anteigung mit BiOCl-Pigmenten)

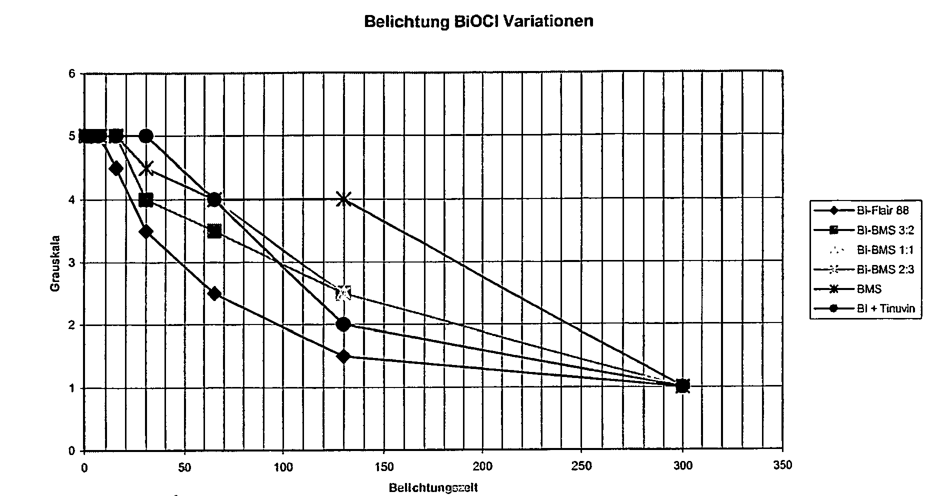

Gegenstand der Erfindung sind Perlglanzpigmentpräparationen, enthaltend

| | |
|---|---|
| 5-15 Gew.% | Bindemittel |
| 10-60 Gew.% | BiOCI/Perlglanzpigment (20:80 bis 80 : 20) |
| 0,1-30 Gew.% | Weichmacher |
| 10-60 Gew.% | Wasser und/oder organisches Lösemittel bzw. -gemisch |
| 0,1-10 Gew.% | Additive . |

Die erfindungsgemäße Perlglanzpigmentpräparation ist einfach und leicht zu handhaben. Die Pigmentmischung kann durch einfaches Einrühren in das Anwendungssystem eingearbeitet werden. Der Eintrag von Luft ist dabei zu vermeiden, damit durch aufsteigende Luftbläschen keine Störungen in der Knopfplatte entstehen. Solche Fehlstellen sind in perlglänzenden Einfärbungen nicht allein auf den Fremdkörper begrenzt, sondern zeichnen sich durch Fehlorientierung der Pigmentplättchen als Fließlinie deutlich sichtbar ab.

Die erfindungsgemäße Perlglanzpigmentpräparation ist insbesondere für Gießharze geeignet. Geeignete Gießharze sind insbesondere ungesättigte Polyester, Formaldehyd-, (Meth)acrylatharze und Epoxidharze. Besonders bevorzugt handelt es sich bei den Gießharzen um ungesättigte Polyesterharze. In der Regel wird aus den pigmentierten Gießharzen zunächst ein Plattenmaterial hergestellt, das dann z.B. zu Knöpfen, Griffen, Schnallen und Spangen weiterverarbeitet wird.

Die Platten werden entweder zwischen Spiegelglasscheiben oder in der Schleudertrommel gegossen. Der Trommelguss kommt für kalthärtende Systeme, insbesondere ungesättigte Polyesterharze in Frage. Methacrylatharze werden überwiegend warm ausgehärtet, was am besten in Glasformen geschieht. Damit sich die Pigmente in der erfindungsgemäßen Perlglanzpigmentpräparation nicht absetzen, müssen die Gießharze genügend viskos sein. Monomeres Methacrylat muss bis zur erforderlichen Konsistenz vorpolymerisiert werden.

Beim Trommelguss bewirkt die Zentrifugalkraft ein gleichmäßiges Fließen des Harzes. Dieser Fließvorgang ruft die Orientierung der Pigmentplättchen hervor. Variationsmöglichkeiten ergeben sich durch zonen- oder schichtweises Eingießen verschiedenfarbiger Harze oder durch gewollte Bildung von Strömungsturbulenzen. Schließlich können den noch plastisch der Schleudertrommel entnommenen Platten Strukturen eingeprägt werden, die wegen der Lageänderung der Perlmuttpigmente auch nach dem Glattdrehen oder Abschleifen der Plattenoberfläche sichtbar bleiben.

Beim Guss zwischen Glasplatten werden die Pigmentteilchen meist durch Vibration orientiert. Die zur Polymerisation erforderliche Temperatur wird durch Einstellen in ein Luft- oder Wasserbad konstant gehalten.

Wolkige Strukturen erhält man, wenn in einem möglichst späten Stadium Drähte, Magnetstäbchen oder dergleichen durch das Harz bewegt werden.

Die erfindungsgemäße Perlglanzpigmentpräparation kann zur Pigmentierung von Lacken, Pulverlacken, Farben, Druckfarben, Sicherheitsdruckfarben, Kunststoffen, Kunstperlen, Agrarfolien, Saatgutbeschichtungen, dekorativen Platten für den Architekturbereich und das Thermoformen, insbesondere Knopfplatten und Bijouterieartikeln und in kosmetischen Formulierungen, verwendet werden.

Die Konzentration der Perlglanzpigmentpräparation im zu pigmentierenden Anwendungssystem liegt in der Regel zwischen 0,1 und 3,0 Gew.%, vorzugsweise zwischen 0,2 und 1,5 Gew.% und insbesondere zwischen 0,4 und 1,0 Gew.%, bezogen auf den Gesamtfestkörpergehalt des Systems. Sie ist aber abhängig vom konkreten Anwendungsfall.

Gegenstand der Erfindung sind somit auch Formulierungen enthaltend die erfindungsgemäße Perlglanzpigmentpräparation und damit pigmentierte Produkte.

Die nachfolgenden Beispiele sollen die Erfindung erläutern, ohne sie jedoch zu begrenzen.

### Beispiele

### I. Glanzmessungen

Mit einem Spektralphotometer (Gerät: Zeiss GK 311/M Doppelgonio) werden Glanzwerte von BiOCl und einem feinteiligen TiO₂/Glimmer-Pigment (Iriodin^{®} 123: TiO₂/Glimmerpigmen der Teilchengröße 5-20 µm, Produkt der Fa. Merck KGaA, Darmstadt) sowie deren Mischungen in Abhängigkeit vom außerhalb der Reflexion gelegenen jeweiligen Messwinkel gemessen. Die Prüfkörper sind im Schleuderguss hergestellte Platten aus ungesättigtem Polyesterharz mit einem Gehalt an Pigmentpräparation von 0,8 %. Die Pigmentpräparationen haben einen Pigmentgehalt von 30 %.

| Pigmentgemisch | 25° | 20° | 15° | 10° | 5° |
|---|---|---|---|---|---|
| BiOCl | 46,6 | 56,2 | 65,2 | 74,1 | 80,2 |
| BiOCI/Iriodin^{®} 123 3 : 2 | 44,4 | 54,6 | 64,3 | 73,7 | 80,2 |
| BiOCI/Iriodin^{®} 123 1 : 1 | 43,8 | 53,8 | 63,2 | 72,5 | 78,7 |
| BiOCI/Iriodin^{®} 123 2 : 3 | 41,3 | 51,2 | 60,6 | 69,9 | 75,5 |
| Iriodin^{®} 123 | 39,7 | 50,0 | 60,0 | 69,4 | 73,5 |

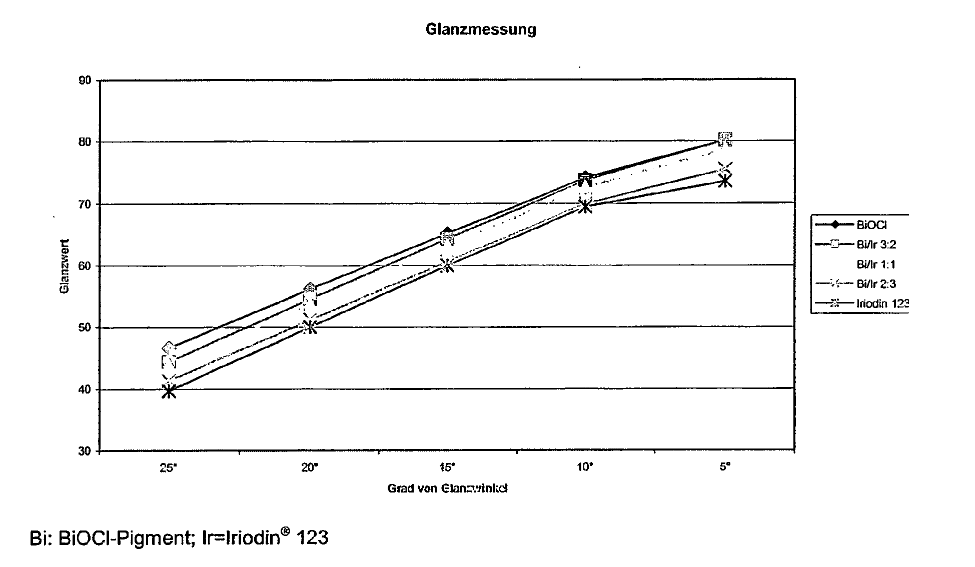

### II. Rezepturen für Knopfplatten

### Beispiel 2.1

- 1000 g: Polyester-Gießharz (Paraffin-haltig)
- 6 g: BiOCI-Pigment/Iriodin^{®} 123 (60 : 40) - 30 %ige Paste in Alkydharz, Dibutylphthalat und Butylacetat
- 4 ml: Cobaltoctoat (1 % Cobalt)
- 24 ml: Cyclohexanonperoxid (50 %)

Die nach obiger Rezeptur erhaltenen Knopfplatten zeigen einen hochglänzenden Perlmutteffekt, der in Glanz und Deckvermögen von basischem Bleicarbonat erst bei doppelter Pigmentmenge erreicht wird.

### Beispiel 2.2

Bei dem Zweifarbenguss sind zwei getrennte Ansätze Mischung A) und B) erforderlich sind. Beide Mischungen werden abwechselnd unter Ausbildung von Strukturen und Wolken in die laufenden Trommel gegossen, wobei eine Durchmischung beider Ansätze nicht eintreten sollte.

### Mischung A

- 1000 g: Polyester-Gießharz
- 8 g: BiOCl-Pigment/Iriodin 123^{®} (1 : 1) - 30%ige Paste in einem Gemisch aus Alkydharz, Dibutylphthalat und Butylacetat
- 4 g: Methanol
- 4,8 ml: Cobaltoctoat (1 % Cobalt)
- 24 ml: Cyclohexanonperoxid (50 %)

### Mischung B

- 1000 g: Polyester-Gießharz
- 2 g: Ruß
- 6 ml: Cobaltoctoat (1 % Cobalt)
- 24 ml: Cyclohexanonperoxid (50 %)

Die nach o.g. Rezeptur gefertigte Knopfplatte zeigt ein lebhaftes Streifenmuster aus perlmuttfarbenen und schwarzen Streifen.

### Beispiel 2.3

- 1000 g: Polyester-Gießharz (Paraffin-haltig)
- 3 g: BiOCI-Pigment 30 %ige Paste in einer Lösung von Alkydharz, Weichmacher und Lösungsmittel
- 3 g: Iriodin^{®} 123 - 30%ig angeteigt in Styrol
- 4 ml: Cobaltoctoat (1 % Cobalt)
- 24 ml: Cyclohexanonperoxid (50 %)

Obgleich die Mischung der beiden Komponenten A und B erst im Gießharz erfolgt, ist das Ergebnis vergleichbar mit dem Beispiel 2.1.

### Beispiel 2.4

- 1000 g: PMMA Gießharz (Plexit Fa. Röhm)
- 8 g: BiOCI-Pigment / Iriodin^{®} 123 (70 : 30) - 30 %ig in einem Nitrocelluloselack
- 3 g: *α, α*'- Azoisobutyronitril
- 3 g: Dioctylnatriumsulfosuccinat

Das homogen eingefärbte Gießharz wird bei 70 °C zwischen Glasplatten ausgehärtet. Die Härtung erfolgt in einem temperierten Wasserbad liegend unter horizontal wirkender Vibration. Nach dem Entformen erhält man eine perlmuttglänzende Platte, die als dekoratives Wandelement Anwendung findet.

### Beispiel 2.5

- 1000 g: Nitrocelluloselack aufgebaut aus 4 Teilen einer hochviskosen Nitrocellulose gelöst in 96 Teilen einer Mischung von Ether/Ethanol
- 10 g: BiOCI-Pigment / Iriodin^{®} 111 (1 :1) - 35 %ig in einem Nitrocelluloselack
(Iriodin^{®} 111: TiO₂/Glimmerpigment der Teilchengröße < 15 µm; Produkt der Fa. Merck KGaA, Darmstadt)
- 0,1 %: Eusolex^{®} 4360 (Fa. Merck KGaA, Darmstadt)

Dieser Lack wird aufgrund seines guten Deckvermögens und Glanzes als Grundierung bei der Perlenlackierung eingesetzt. Die weiteren Lackschichten werden mit reinem BiOCI-Hochglanzpigment ausgeführt. Im Vergleich zu nicht grundierten Perlen zeigen die mit der erfindungsgemäßen Perlglanzpigmentpräparation grundierten Perlen eine deutich höhere Brillanz und Farbreinheit.

## Patentansprüche

1. Hochglänzende, nichttoxische Perlglanzpigmentpräparation enthaltend
| | |
|---|---|
| 5-15 Gew.% | Bindemittel, |
| 10-60 Gew.% | Pigmentgemisch bestehend aus zwei Komponenten A und B im Verhältnis 20 : 80 bis 80 : 20, wobei Komponente A BiOCI-Pigmente und Komponente B Perlglanzpigmente auf Basis plättchenförmiger Substrate sind, |
| 0,1 - 30 Gew.% | Weichmacher, |
| 10 - 60 Gew.% | Wasser und/oder organisches Lösemittel bzw. - gemisch, |
| 0,1 - 10 Gew.% | Additive. |

2. Perlglanzpigmentpräparation nach Anspruch 1, **dadurch gekennzeichnet, dass** Komponente A ein BiOCI-Hochglanzpigment ist und einen Teilchendurchmesser von 6 bis 20 µm aufweist.

3. Perlglanzpigmentpräparation nach Anspruch 1 oder 2, **dadurch gekennzeichnet, dass** Komponente B ein Perlglanzpigment auf Basis von Glimmer-, Fe₂O₃-, Glas-, TiO₂-, SiO₂-, Al₂O₃-, Polymer- oder Graphitplättchen ist.

4. Perlglanzpigmentpräparation nach einem der Ansprüche 1 bis 3, **dadurch gekennzeichnet, dass** das Perlglanzpigment der Komponente B eine Teilchengrößenverteilung von 1 bis 200 µm aufweist.

5. Pigmentmischung nach einem der Ansprüche 1 bis 4, **dadurch gekennzeichnet, dass** das Perlglanzpigment ein TiO₂-Glimmer-pigment ist.

6. Perlglanzpigmentpräparation nach einem der Ansprüche 1 bis 5, **dadurch gekennzeichnet, dass** die Präparation als Paste vorliegt.

7. Perlglanzpigmentpräparation nach einem der Ansprüche 1 bis 6, **dadurch gekennzeichnet, dass** sie zusätzlich die in der Kunststoffverarbeitung üblichen Additive enthält.

8. Perlglanzpigmentpräparation nach Anspruch 7, **dadurch gekennzeichnet, dass** es sich bei den Additiven um Verlaufmittel, Antiabsetzmittel, Antistatika, UV-Stabilisatoren, Haftvermittler, Dispergierhilfen, oberflächenaktive Substanzen, Entschäumer, Emulgatoren, Netzmittel handelt.

9. Perlglanzpigmentpräparation nach Anspruch 7 oder 8, **dadurch gekennzeichnet, dass** der Anteil der Additive 0-10 Gew.% bezogen auf die Präparation beträgt.

10. Perlglanzpigmentpräparation nach einem der Ansprüche 1 bis 9, **dadurch gekennzeichnet, dass** sie zusätzlich Wasser und/oder ein organisches Lösemittel oder Lösemittelgemisch enthält.

11. Perlglanzpigmentpräparation nach einem der Ansprüche 1 bis 10 **dadurch gekennzeichnet, dass** sie zusätzlich einen Weichmacher enthält.

12. Verfahren zur Herstellung einer Perlglanzpigmentpräparation nach einem der Ansprüche 1 bis 11, **dadurch gekennzeichnet, dass** Komponente A in Pastenform und Komponente B als Pulver oder Paste miteinander gemischt werden.

13. Verwendung der Perlglanzpigmentpräparation nach einem der Ansprüche 1 bis 12 in Lacken, Pulverlacken, Farben, Druckfarben, Sicherheitsdruckfarben, Kunststoffen, Kunstperlen, Agrarfolien, Saatgutbeschichtungen, dekorativen Platten für den Architekturbereich, Thermoformen, Knopfplatten, Bijouterieartikeln und in kosmetischen Formulierungen.

14. Verwendung der Perlglanzpigmentpräparation nach Anspruch 13, **dadurch gekennzeichnet, dass** es sich bei den Kunststoffen um Gießharze handelt.

15. Verwendung der Periglanzpigmentpräparation nach Anspruch 14, **dadurch gekennzeichnet, dass** das Gießharz ein ungesättigtes Polyesterharz ist.

16. Formulierungen enthaltend eine Perlglanzpigmentpräparation nach einem der Ansprüche 1 bis 11.

## Claims

1. High-lustre, non-toxic pearlescent pigment composition comprising
5 - 15% by weight of binders,
10 - 60% by weight of a pigment mixture consisting of two components A and B in the ratio 20 : 80 to 80 : 20, where component A comprises BiOCl pigments and component B comprises pearlescent pigments based on flake-form substrates,
0.1 - 30% by weight of plasticisers,
10 - 60% by weight of water and/or organic solvent or solvent mixture,
0.1 - 10% by weight of additives.

2. Pearlescent pigment composition according to Claim 1, **characterised in that** component A is a high-lustre BiOCl pigment and has a particle diameter of 6 to 20 µm.

3. Pearlescent pigment composition according to Claim 1 or 2, **characterised in that** component B is a pearlescent pigment based on mica flakes, Fe₂O₃ flakes, glass flakes, TiO₂ flakes, SiO₂ flakes, Al₂O₃ flakes, polymer flakes or graphite flakes.

4. Pearlescent pigment composition according to one of Claims 1 to 3, **characterised in that** the pearlescent pigment of component B has a particle size distribution of 1 to 200 µm.

5. Pigment mixture according to one of Claims 1 to 4, **characterised in that** the pearlescent pigment is a TiO₂/mica pigment.

6. Pearlescent pigment composition according to one of Claims 1 to 5, **characterised in that** the composition is in the form of a paste.

7. Pearlescent pigment composition according to one of Claims 1 to 6, **characterised in that** it additionally comprises the usual additives in plastics processing.

8. Pearlescent pigment composition according to Claim 7, **characterised in that** the additives are flow-control agents, antisettling agents, anti-statics, UV stabilisers, adhesion promoters, dispersion aids, surface-active substances, antifoams, emulsifiers, wetting agents.

9. Pearlescent pigment composition according to Claim 7 or 8, **characterised in that** the proportion of the additives is 0-10% by weight, based on the composition.

10. Pearlescent pigment composition according to one of Claims 1 to 9, **characterised in that** it additionally comprises water and/or an organic solvent or solvent mixture.

11. Pearlescent pigment composition according to one of Claims 1 to 10, **characterised in that** it additionally comprises a plasticiser.

12. Process for the preparation of a pearlescent pigment composition according to one of Claims 1 to 11, **characterised in that** component A in paste form and component B in the form of a powder or paste are mixed with one another.

13. Use of the pearlescent pigment composition according to one of Claims 1 to 12 in surface coatings, powder coatings, paints, printing inks, security printing inks, plastics, artificial pearls, agricultural sheeting, seed coatings, decorative sheets for the architectural sector, thermoforming, button plates, jewellery articles and in cosmetic formulations.

14. Use of the pearlescent pigment composition according to Claim 13, **characterised in that** the plastics are casting resins.

15. Use of the pearlescent pigment composition according to Claim 14, **characterised in that** the casting resin is an unsaturated polyester resin.

16. Formulations comprising a pearlescent pigment composition according to one of Claims 1 to 11.

## Revendications

1. Composition de pigments nacrée à haute brillance et non toxique comprenant
5 - 15% en poids de liants,
10 - 60% en poids d'un mélange de pigments constitué de deux composants A et B selon un rapport allant de 20:80 à 80:20, où le composant A comprend des pigments de BiOCl et le composant B comprend des pigments nacrés à base de substrats en forme de paillettes,
0,1 - 30% en poids de plastifiants,
10 - 60% en poids d'eau et/ou de solvant organique ou d'un mélange des solvants,
0,1 - 10% en poids d'additifs.

2. Composition de pigments nacrée selon la revendication 1, **caractérisée en ce que** le composant A est un pigment de BiOCl haute brillance et présente un diamètre de particules allant de 6 à 20 µm.

3. Composition de pigments nacrée selon la revendication 1 ou 2, **caractérisée en ce que** le composant B est un pigment nacré à base de paillettes de mica, de paillettes de Fe₂O₃, de paillettes de verre, de paillettes de TiO₂, de paillettes de SiO₂, de paillettes de Al₂O₃, de paillettes de polymère ou de paillettes de graphite.

4. Composition de pigments nacrée selon l'une des revendications 1 à 3, **caractérisée en ce que** le pigment nacré du composant B présente une distribution de taille de particules allant de 1 à 200 µm.

5. Mélange de pigments selon l'une des revendications 1 à 4, **caractérisé en ce que** le pigment nacré est un de pigment TiO₂/mica.

6. Composition de pigments nacrée selon l'une des revendications 1 à 5, **caractérisée en ce que** la composition est sous la forme d'une pâte.

7. Composition de pigments nacrée selon l'une des revendications 1 à 6, **caractérisée en ce qu'**elle comprend en outre les additifs habituels pour le traitement des matières plastiques.

8. Composition de pigments nacrée selon la revendication 7, **caractérisée en ce que** les additifs sont des agents de contrôle d'écoulement, des agents stabilisateurs, des agents antistatiques, des agents stabilisateurs d'UV, des agents favorisant l'adhésion, des auxiliaires de dispersion, des substances tensioactives, des antimousses, des émulsifiants, des agents de mouillage.

9. Composition de pigments nacrée selon la revendication 7 ou 8, **caractérisée en ce que** la proportion des additifs est de 0-10% en poids, sur la base de la composition.

10. Composition de pigments nacrée selon l'une des revendications 1 à 9, **caractérisée en ce qu'**elle comprend en outre de l'eau et/ou un solvant organique ou un mélange de solvants.

11. Composition de pigments nacrée selon l'une des revendications 1 à 10, **caractérisée en ce qu'**elle comprend en outre un plastifiant.

12. Procédé de préparation d'une composition de pigments nacrée selon l'une des revendications 1 à 11, **caractérisé en ce que** le composant A sous forme de pâte et le composant B sous forme de poudre ou de pâte sont mélangés l'un avec l'autre.

13. Utilisation de la composition de pigments nacrée selon l'une des revendications 1 à 12 dans les revêtements de surface, les revêtements pulvérulents, les peintures, les encres d'impression, les encres d'impression de sécurité, les matières plastiques, les perles artificielles, les films à usage agricole, les enrobages de semences, les feuilles décoratives pour le domaine de l'architecture, le thermoformage, les plaques de boutons, les articles de joaillerie et dans les formulations cosmétiques.

14. Utilisation de la composition de pigments nacrée selon la revendication 13, **caractérisée en ce que** les matières plastiques sont des résines de coulée.

15. Utilisation de la composition de pigments nacrée selon la revendication 14, **caractérisée en ce que** la résine de coulée est une résine de polyester insaturé.

16. Formulations comprenant une composition de pigments nacrée selon l'une des revendications 1 à 11.
